(19)

**Europäisches Patentamt**
**European Patent Office**
**Office européen des brevets**

(11)   **EP 1 724 314 B1**

(12)   **EUROPEAN PATENT SPECIFICATION**

(45) Date of publication and mention
of the grant of the patent:
**22.10.2008  Bulletin 2008/43**

(51) Int Cl.:
***C09D 11/00*** *(2006.01)*

(21) Application number: **06252466.5**

(22) Date of filing: **10.05.2006**

(54) **Ink-jet ink**

Tintenstrahltinte

Encre pour impression à jet d'encre

(84) Designated Contracting States:
**AT BE BG CH CY CZ DE DK EE ES FI FR GB GR HU IE IS IT LI LT LU LV MC NL PL PT RO SE SI SK TR**

(30) Priority: **16.05.2005  JP 2005142380**

(43) Date of publication of application:
**22.11.2006  Bulletin 2006/47**

(73) Proprietor: **KONICA MINOLTA HOLDINGS, INC.**
**Tokyo 100-0005 (JP)**

(72) Inventors:
• **Mori, Hisashi c/o Konika Minolta IJ Tech. Inc.**
**Tokyo 191-8511 (JP)**

• **Iijima, Hirotaka c/o Konika Minolta IJ Tech. Inc.**
**Tokyo 191-8511 (JP)**

(74) Representative: **McCluskie, Gail Wilson**
**J.A. Kemp & Co.**
**14 South Square**
**Gray's Inn**
**London WC1R 5JJ (GB)**

(56) References cited:
**EP-A- 0 719 845          EP-A- 0 780 450**
**EP-A- 1 045 010          EP-A- 1 094 095**
**US-A- 5 224 987          US-A1- 2004 231 556**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

The present invention relates to a novel ink-jet ink.

**BACKGROUND**

In recent years, ink jet recording systems have been applied to various printing fields such as photography, various types of printing, marking, or special printing such as color filters, since the system enables simple and low cost production of images. By employing ink-jet recording apparatuses which eject minute ink droplets and control them, inks of which color reproduction range, durability and ejection adaptability are improved, and customized paper sheets of which ink absorbability, color forming properties of colorants, and surface glossiness are markedly improved, it has become possible to realize image quality comparable to conventional silver salt photography.

However, in an ink-jet image recording system which requires customized sheets, problems occur in which the cost of recording media increases since usable recording media are limited.

On the other hand, in business office settings, increasingly demanded are systems capable of conducting full color printing without any restriction of recording media (such as plain paper, coated paper, or art paper).

In view of high speed printing capability, and desired text reproduction on plain paper, as well as minimal penetration of ink to the rear side during printing (being a phenomenon in which printed ink penetrates through the recording medium, whereby parts of the image appear on the rear side), and formation of neither feathering nor image bleeding, various investigations have been conducted with regard to ink-jet ink compositions.

As one of the methods, water based ink-jet ink is widely employed. When image recording is conducted onto electrophotographic copy sheets or plain paper sheets such as high or medium quality paper, problems occur in which the image recorded on plain paper sheets results in relatively excessive curling and cockling.

In order to overcome the above drawbacks, disclosed is an ink-jet ink which incorporates specified amido compounds, pyridine derivatives, imidazoline compounds, or urea compounds as an anti-curling agent (refer, for example, to Patent Document 1). However, when images are formed on plain paper employing a water based ink-jet ink, it is required to incorporate the anti-curling agents in an amount of at least 10% by weight in order to attain minimal curling. As a result, the solid concentration in the ink-jet ink increases, whereby problems, such as insufficient dispersion stability, increase in ink viscosity, and nozzle clogging, tend to occur.

Further, disclosed is an ink jet method in which polyols are incorporated as a curling agent (refer, for example, to Patent Documents 2 and 3). However, in an ink-jet recording method employing plain paper, the resulting anti-curling capability has been insufficient.

(Patent Document 1) Japanese Patent Publication for Public

Inspection (herein after referred to as JP-A) No. 9-176538

(Patent Document 2) JP-A No. 6-157955

(Patent Document 3) JP-A No. 6-240189

**SUMMARY**

In view of overcoming the foregoing, the present invention was achieved. An object of the present invention is to provide an ink-jet ink which exhibits excellent ejection stability, and also exhibits excellent rear side penetration resistance and curling resistance when employing plain paper for printing.

The above object of the present invention is realized employing the following embodiments.

(1) An ink-jet ink comprising water and a compound represented by Formula (1) or Formula (2), provided that the compound is dissolved in the ink:

$$\text{Formula (1)} \qquad R_1R_2N\text{-}CX\text{-}NR_3R_4$$

wherein $R_1$, and $R_2$ are each a hydrogen atom; $R_3$ and $R_4$ each independently represents a hydrogen atom, an alkyl group, or a group having a benzene ring or a heterocyclic ring; provided that a total number of carbon atoms and nitrogen atoms contained in $R_3$ and $R_4$ is 7 to 10; and X represents an oxygen atom or a sulfur atom,

$$\text{Formula (2)} \qquad R_5\text{-}CX\text{-}NR_6R_7$$

wherein $R_5$ represents an alkyl group, or a group having a benzene ring or a heterocyclic ring; provided that a total of carbon atoms and nitrogen atoms in $R_5$ is 6 to 10; $R_6$ and $R_7$ each represent a hydrogen atom; and X represents an oxygen atom or a sulfur atom,
the ink jet ink further comprising Solvent A compatible with water and having an SP value of 9 to 13.5, a content of Solvent A being from 50 to 80 weight % based on a total weight of the ink-jet ink.
The amount of the compound represented by Formula (1) or Formula (2) should not be over the maximum solubility in the ink.
(2) The ink-jet ink of the above-described item 1,
wherein a content of water is from 10 to 80 weight % based on a total weight of the ink-jet ink.
(3) The ink-jet ink of the above described item 2,
wherein Solvent A has a surface tension of not more than 40 mN/m at 25 °C.
(4) The ink-jet ink of one of the above-described items 1 to 3,
wherein the compound represented by Formula (1) or Formula (2) comprises a benzene ring or a heterocyclic ring in the molecule.
(5) The ink-jet ink of the above-described item 4,
wherein the compound represented by Formula (1) or Formula (2) is acetanilide.
(6) The ink-jet ink of one of the above-described items 1 to 5,
wherein the Solvent A has a smaller vapour pressure than water.
(7) The ink-jet ink of the above-described item 6,

wherein the compound represented by Formula (1) or Formula (2) comprises a benzene ring in the molecule.
According to the present invention, it is possible to provide an ink-jet ink containing a novel anti-curling agent which effectively prevents curing with a small amount of addition.

## DESCRIPTION OF THE PREFERRED EMBODIMENTS

The preferred embodiments of the present invention will now be detailed.
In view of the foregoing, the inventors of the present invention conducted diligent investigations. As a result, it was discovered that by incorporating, into ink, the compounds represented by above Formula (1) or (2) as an anti-curling agent, it was also possible to realize an ink-jet ink which resulted in excellent curling resistance.
The reasons of the above curl reduction are assumed to be as follows. The novel anti-curling agents represented by Formula (1) or (2) incorporate more carbon atoms than the anti-curling agents known in the art, which are more hydrophobic. As a result, recombination between cellulose fibers swelled by the ink-jet ink (hereinafter also referred simply to as the ink) is easily hindered, whereby excellent anti-curling effects are exhibited. Alternatively, the surface of the cellulose fibers is subjected to hydrophobicity to lower capillary phenomena induced by evaporation of ink solvents, whereby sufficient force to result in curling is not realized, or curling is decreased due to both effects.
It is assumed that compounds (1) and (2) are characterized in incorporating an amido bond in the molecule; this amido bond positively results in formation of a hydrogen bond with cellulose; and the aforesaid novel anti-curling agents are effectively adsorbed onto the surface of the cellulose, whereby it is possible to more effectively exhibit curl-minimizing effects.
However, the novel anti-curling agents represented by Formula (1) or (2) used in the present invention are provided with hydrophobic characteristics to result in low solubility in a water based ink, whereby problems such as blocking of the nozzles may occur depending on the composition of the ink or the head structure. In the present invention, in order to overcome the above drawbacks, the novel hydrophobic anti-curling agents, represented by Formula (1) or (2) are solubilized by incorporating, as a dissolution aid, Solvent A at an SP value of at most 13.5 in an amount of from 50 to 80% by weight with respect to the total ink weight, whereby it is possible to stabilize curl characteristics without degrading ejection stability. In view of ejection stability and ink dispersion stability, compatibility with water is required. Consequently, the lower limit of SP value should be at least 9. In such a case, it is preferable to select for Solvent A from a group of solvents exhibiting a surface tension of at most 40 mN/m since it is possible to significantly minimize curling and to also enhance solubility of anti-curling agents.
The present invention will now be detailed.
Initially, detailed will be the novel anti-curling agents represented by Formula (1) or (2).
The novel anti-curling agents represented by Formula (1) or (2) may be employed individually or in combinations of at least two types as long as the total amount is in the range of from 3.0 - 30% by weight with respect to the total ink weight.

Formula (1)          $R_1R_2N\text{-}CX\text{-}NR_3R_4$

In above Formula (1), $R_1$, and $R_2$ are each a hydrogen atom; $R_3$ and $R_4$ each independently represents a hydrogen atom, an alkyl group, or a group having a benzene ring or a heterocyclic ring; the total number of carbon atoms and nitrogen atoms which constitute $R_3$ and $R_4$ is 7 - 10; and X represents an oxygen atom or a sulfur atom.

Formula (2)          $R_5\text{-}CX\text{-}NR_6R_7$

In above Formula (2), $R_5$ represents an alkyl group, or a group having a benzene ring or a heterocyclic ring; the total number of carbon atoms and nitrogen atoms which constitute $R_5$ is 6 - 10; $R_6$ and $R_7$ are each a hydrogen atom; and X represents an oxygen atom or a sulfur atom.

It is preferable that the alkyl groups represented by $R_3$, and $R_4$ are those selected from straight or branched alkyl groups having 1 - 10 carbon atoms. The alkyl group may partially incorporate a double bond or a triple bond. Specific examples include a methyl group, an ethyl group, a propyl group, an isopropyl group, a butyl group, an isobutyl group, a t-butyl group, a pentyl group, a hexyl group, a heptyl group, an octyl group, a nonyl group, a vinyl group, and an allyl group.

Further, listed as a group having a benzene ring or a heterocyclic ring may be a phenyl group or a benzyl group.

The above-described $R_1$ to $R_4$ and $R_5$ to $R_7$ are each independently selected. When a ring is formed among $R_1$ to $R_4$ or $R_5$ to $R_7$, a sufficient anti-curing effect cannot be obtained.

Specific examples of novel anti-curling agents represented by Formula (1) or (2) include, but are not limited to, nicotinamide, acetanilide, benzylurea, formanilide, N-methylbenzamide, N-ethyl-N-phenylurea, phenylethylurea, N, N-dibutylurea, tetraethylurea, N,N-dibutylthiourea, N,N-isobutylthiourea, toluamide, n-decylthiourea, benzamide, N-butylacetamide, methylformanilide, dimethylhexanoamide, 2,2-dipropylacetamide, N,N-dimethylbenzamide, dimethylhexanoamide, medthylacetanilide, dibutylformamide, and dimethylacetanilide.

Preferred as the novel anti-curling agents represented by Formula (1) or (2), which are in the preferred range, in view of ejection properties, are those having a benzene ring or a heterocyclic ring, since few satellites are formed.

Listed as such compounds are acetanilide, benzylurea, formanilide, N-methylbenzamide, and N-ethyl-N-phenylurea.

Further in view of anti-curling performance, the novel anti-curling agents represented by Formula (1) or (2) incorporate $-NH_2$ in their structure. Namely, both $R_1$ and $R_2$ in Formula (1) are hydrogen atoms and both $R_6$ and $R_7$ in Formula (2) are hydrogen atoms since anti-curling effects are enhanced.

Listed as such compounds are nicotinamide, benzylurea, N-ethyl-N-phenylurea, N,N-dibutylurea, N,N-dibutylthiourea, N,N-isobutylthiourea, and n-decylthiourea.

Further, though having no $-NH_2$ in the structure, listed as a preferred compound in view of curling resistant capability is acetanilide.

In view of effectively minimizing curling during printing onto plain paper, the added amount of the novel anti-curling agents represented by Formula (1) or (2) in the ink-jet ink of the present invention is preferably 3.0 - 30% by weight. When the content in the ink is at least 3.0% by weight, anti-curling effects are enhanced. Further, when the added amount of anti-curling agents exceeds 30% by weight, minus curling occasionally occurs in such a manner that the printed surface results in a convex curve. Therefore, the added amount of anti-curling agents is preferably at most 30% by weight.

In view of anti-curling effects, the added amount of anti-curling agents is more preferably 5.0 - 25% by weight. Further, depending on the ink constitution, constituting materials, such as colorants or minute resinous particles, result in mutual interaction with the anti-curling agents according to the present invention, whereby coagulation or an increase in viscosity occasionally occurs. Consequently, in view of ejection stability, it is preferable that the added amount of the anti-curling agents is as small as possible.

However, even though the added amount of the above anti-curling agents is within the preferable range, it is not possible to prepare ink when the amount of anti-curling agents which exceed their solubility in the ink, is added. Consequently, addition of the anti-curling agents, which will not be completely dissolved, is not preferred.

The solubility of an anti-curling agent in an ink can be determined by adding a small portion of an anti-curling agent into an ink at 25 °C with agitating. It can be determined the limiting point in which the an anti-curling agent is dissolved by this procedure.

Components of the ink-jet ink and the other of the present invention will now be described.

The ink-jet ink of the present invention is a water based ink which contains water and water-compatible solvents when required and water-soluble dyes or pigments.

Further, when vapor pressure of Solvent A is lower that that of water, water is primarily evaporated during evaporation of ink solvents, whereby the solvent ratio is increased, resulting in an increase in solubility of anti-curling agents. Due to the above, in the case in which nozzles are allowed to stand over a long period, solubility of the anti-curling agents is increased along with drying, whereby nozzle clogging due to deposition of the anti-curling agents tends to not occur. Further, it is preferable that the vapor pressure is at most 133 Pa, since it is thereby possible to decrease the evaporation rate in the nozzle section, whereby decapping tends to not occur.

Water based ink enables printing at a high rate, results in excellent reproduction of characters on plain paper, and does not result in rear side penetration, feathering and image bleeding during printing. In practice, when water is incorporated in the ink in an amount of at most 10%, the rear side penetration is markedly minimized when printing onto plain paper.

"Solubility parameter (SP value)", as described in the present invention, is the value represented by the square root of molecular cohesive energy, and values are employed which are described in Chapter IV Solubility Parameter Values of Polymer Handbook (Second Edition). Units are $J/cm^3$ and values refer to those at 25 °C. It is possible to calculate SP values, which are not described in the above reference, based on the determined boiling point and heat of evaporation.

Solubility parameters (SP values) may be determined practically. However, in the present invention, employed as an SP value were those calculated based on evaporation energy as well as the molar volume of an atom and a group of atoms by Fedors.

Particularly preferred Solvent A includes those which exhibit surface tension of at most 40 mN/m at 25 °C. By employing solvents in the above range, in addition to anti-curling effects via anti-curling agents, it is possible to achieve anti-curling effects via Solvent A itself, and further it is also possible to enhance solubility of anti-curling agents. The above surface tension is more preferably 25 - 35 mN/m.

When above Solvent A is selected, it is preferable to employ water based solvents at a viscosity of at most 50 Pa·s. By employing such solvents in the above range, it becomes easier to control ink viscosity to at most 40 mPa·s, resulting in high ejection stability.

Specific examples of Solvent A used in the ink-jet ink according to the present invention, which satisfy these conditions, include ethylene glycol monobutyl ether, diethylene glycol monomethyl ether, diethylene glycol monoethyl ether, diethylene glycol monopropyl ether, diethylene glycol monobutyl ether, triethylene glycol monomethyl ether, triethylene glycol monopropyl ether, triethylene glycol monobutyl ether, tetraethylene glycol monomethyl ether, tetraethylene glycol monoethyl ether, propylene glycol monobutyl ether, dipropylene glycol monomethyl ether, dipropylene glycol monoethyl ether, dipropylene glycol monopropyl ether, diethylene glycol monobutyl ether, tripropylene glycol monomethyl ether, tripropylene glycol monoethyl ether, tripropylene glycol monopropyl ether, tripropylene glycol monobutyl ether, tetrapropylene glycol monomethyl ether, diethylene glycol diethyl ether, diethylene glycol dibutyl ether, triethylene glycol diethyl ether, triethylene glycol dibutyl ether, dipropylene glycol dibutyl ether, tripropylene glycol dibutyl ether, 3-methyl-2,4-pentanediol, and diethylene glycol monoethyl ether acetate.

The ink of the present invention is characterized in that Solvent A is incorporated in an amount of from 50 to 80% by weight with respect to the total ink weight. When the added amount is less than or equal to the above, it is not possible to realize sufficient solubility of the novel anti-curling agents specified in the present invention.

In view of the foregoing, while incorporating water in an amount of at least 20% by weight as a water based ink, the present invention is characterized in that Solvent A is employed in the range of 50 to 80% by weight with respect to the total ink weight.

Incorporated in the ink of the present invention are various functional additives, in addition each of the solvents described above.

Colorants are also incorporated in the ink of the present invention. Examples of the hue of colorants preferably employed in the ink of the present invention include yellow, magenta, cyan, black, blue, green, red, and of these, hues of yellow, magenta, cyan and black colorants are most preferably employed.

It is possible to apply the ink of the present invention to various ink-jet inks such as a dye ink incorporating dyes as a colorants, a pigment ink which forms a dispersion system incorporating minute pigment particles while colorants are insoluble in solvents constituting ink-jet ink, or a dispersed ink composed of a polymer dispersion colored by colorants.

Listed as usable dyes in the present invention may be azo dyes, methine dyes, azomethine dyes, xanthene dyes, quinone dyes, phthalocyanine dyes, triphenylmethane dyes, and diphenylmethane dyes. Listed as such specific compounds may, for example, be dyes exemplified in JP-A No. 2002-264490.

Further, selected as oil-soluble dyes which form minute colored particles, along with polymers to become colorants, are dyes, such as disperse dyes, which are soluble in organic solvents having no water solubilizing group such as carboxylic acid or sulfonic acid, but are insoluble in water. Further, included are oil-soluble dyes which are prepared in such a manner that water-soluble dyes are subjected to salt formation with a long chain base. For example, known are salt dyes of acid dyes, direct dyes, or reactive dyes with long chain amine.

However, in the ink of the present invention, it is preferable to employ pigments as a colorant. In view of most satisfactorily realizing the targeted effects, preferred are pigments which are insoluble in the above solvent systems.

Employed as pigments in the present invention may be those known in the art without any limitation, and any of the water-dispersible pigments, or solvent-dispersible pigments may be employed. For example, preferably employed are organic pigments such as insoluble pigments or lake pigments, and inorganic pigments such as carbon black. These pigments are present in a water based ink in a dispersed state. Employed as a dispersing method may be any of self dispersion, surface active agent dispersion, polymer dispersion, or microcapsule dispersion. However, of these, polymer dispersion and microcapsule dispersion are preferred in view of fixability.

The insoluble pigments are not particularly limited. Examples of preferred insoluble pigments include azo, azomethine, methine, diphenylmethane, triphenylmethane, quinacridone, anthraquinone, perylene, indigo, quinophtharone, isoindolinone, isoindolin, azine, oxazine, thiazine, dioxazine, thiazole, phthalocyanine, and diketopyrrolopyrrole.

The following pigments are listed as specific pigments which are preferably usable.

Examples of pigments for magenta or red include C.I. Pigment Red 2, C.I. Pigment Red 3, C.I. Pigment Red 5, C.I. Pigment Red 6, C.I. Pigment Red 7, C.I. Pigment Red 15, C.I. Pigment Red 16, C.I. Pigment Red 48 : 1, C.I. Pigment Red 53 : 1, C.I. Pigment Red 57 : 1, C.I. Pigment Red 122, C.I. Pigment Red 123, C.I. Pigment Red 139, C.I. Pigment Red 144, C.I. Pigment Red 149, C.I. Pigment Red 166, C.I. Pigment Red 177, C.I. Pigment Red 178, and C.I. Pigment Red 222.

Examples of pigments for orange or yellow include C.I. Pigment Orange 31, C.I. Pigment Orange 43, C.I. Pigment Yellow 12, C.I. Pigment Yellow 13, C.I. Pigment Yellow 14, C.I. Pigment Yellow 15, C.I. Pigment Yellow 15 : 3, C.I. Pigment Yellow 17, C.I. Pigment Yellow 93, C.I. Pigment Yellow 128, C.I. Pigment Yellow 94, and C.I. Pigment Yellow 138.

Examples of pigments for green or cyan include C.I. Pigment Blue 15, C.I. Pigment Blue 15 : 2, C.I. Pigment Blue 15 : 3, C.I. Pigment Blue 16, C.I. Pigment Blue 60, and C.I. Pigment Green 7.

Other than the above pigments, when red, green, blue, and intermediate colors are required, it is preferable that the following pigments are employed individually or in combination. Employed examples include:

    C.I. Pigment Red; 209, 224, 177, and 194
    C.I. Pigment Orange; 43
    C.I. Vat Violet; 3
    C.I. Pigment Violet; 19, 23, and 37
    C.I. Pigment Green; 36 and 7
    C.I. Pigment Blue; 15 : 6

Further, examples of pigments for black include C.I. Pigments Black 1, C.I. Pigment Black 6, and C. I. Pigment Black 7.

The average particle diameter of the pigment dispersion employed in the water based ink of the preset invention is preferably 50 - 200 nm. When the average particle diameter of the pigment dispersion is less than 50 nm or exceeds 200 nm, stability of the pigment dispersions tends to be degraded and storage stability of the water based ink tends to deteriorate.

It is possible to determine the diameter of the pigment particle dispersion employing a commercially available particle size meter based on a dynamic light scattering method or an electrophoretic method. Of these, the dynamic light scattering method is frequently employed due to ease of determination and enhanced accuracy within a particle size determination region.

It is preferable that the pigments in the present invention are employed after being dispersed together with dispersing agents and additives which are necessary to realize targeted aims, employing a homogenizer. Employed as a homogenizer may be a ball mill, a sand mill, a line mill, and a high pressure homogenizer, all of which are known in the art. Of these, the sand mill is preferred since dispersion which targets the formation of particles at a diameter of approximately 100 nm results in a narrow particle size distribution. Bead materials employed in the sand mill dispersion are preferably zirconia or zircon, considering the contamination of fragments of beads and ionic components. Further, the diameter of the beads is preferably 0.1 - 0.5 mm.

Listed as polymer dispersing agents to disperse the pigments according to the present invention may, for example, be surface active agents such as higher fatty acid salts, alkyl sulfates, alkyl ester sulfates, alkyl sulfonates, sulfosuccinates, naphthalene sulfonates, alkyl phosphates, polyoxyalkylene alkyl ether phosphates, polyoxyalkylene alkylphenyl ether, polyoxyethylene polyoxypropylene glycol, glycerin ester, sorbitan ester, polyoxyethylene fatty acid amide, or amine oxide, as well as block copolymers and random copolymers composed of at least two monomers selected from the group consisting of styrene, styrene derivatives, vinylnaphthalene derivatives, acrylic acid, acrylic acid derivatives, itaconic acid, itaconic acid derivatives, fumaric acid, and fumaric acid derivatives, as well as salts thereof.

In the present invention, the added amount of pigment dispersing agents is preferably 10 - 100% by weight with respect to the pigments.

During dispersion of pigments according to the present invention, it is possible to employ surface active agents as usable additives. Employed as usable surface active agents in the present invention may be any of those which are cationic, anionic, amphoteric, or nonionic. In view of dispersion stability, it is particularly preferable to employ nonionic surface active agents.

Examples of nonionic surface active agents include polyoxyethylene secondary alcohol ether, polyoxyethylene alkyl phenyl ether, polyoxyethylene sterol ether, polyoxyethylene lanolin derivative, polyoxyethylene polyoxypropylene alkyl ether, polyoxyethylene glycerin fatty acid ester, polyoxyethylene castor oil, hardened castor oil, polyoxyethylene sorbitol fatty acid ester, polyethylene glycol fatty acid ester, fatty acid monoglyceride, sorbitan fatty acid ester, propylene glycol fatty acid ester, saccharose fatty acid ester, fatty acid alkanol amide, polyoxyethylene alkylamine, alkylamine oxide, acetylene glycol, and acetylene alcohol.

Further, in order to accelerate the penetration of ink droplets into plain paper after ink ejection, it is preferable to employ surface active agents. Such surface active agents are not particularly limited as long as they do not adversely affect storage stability of the ink, and further it is possible to employ the same surface active agents as those used as an additive during the aforesaid dispersion.

Further, in the ink of the present invention, the total content of polyvalent metal ions including calcium ions, magnesium ions, and iron ions is preferably at most 10 ppm, is more preferably 0.1 - 5 ppm, but is most preferably 0.1 - 1 ppm.

By controlling the content of polyvalent metal ions in the ink-jet ink, it is possible to produce inks exhibiting high dispersion stability. Polyvalent metal ions according to the present invention are incorporated in sulfates, chlorides, nitrates, acetates, organic ammonium salts, and EDTA salts.

In the ink of the present invention, other than those described above, if required, in response to targets to enhance various types of performance such as ejection stability, adaptability to print heads and ink cartridges, storage stability, or image retention properties, various prior art additives such as polysaccharide, a viscosity controlling agent, a resistivity controlling agent, a film forming agent, a UV absorbing agents, an antioxidant, an anti-fading agent, an antifungal agent, or an anti-corrosive agent may be appropriately selected and employed. Examples include minute oil droplets such as liquid paraffin, dioctyl phthalate, tricresyl phosphate, or silicone oil; UV absorbers described in JP-A Nos. 57-74193, 57-87988, 62-261476; anti-fading agents described in JP-A Nos. 57-74192, 57-87989, 60-72785, 61-146591, 1-95091, and 3-13376; and optical brightening agents described in JP-A Nos. 59-42993, 59-52689, 62-280069, 61-242871, and 4-219266.

The surface tension of the ink of the present invention, constituted as above, is preferably 25 - 40 mN/m at 25 °C, is more preferably 25 - 35 mN/m, but is most preferably 30 - 35 mN/m. Further, the viscosity of the above ink is preferably 1 - 40 mPa·s at 25 °C, is more preferably 5 - 40 mPa·s, but is most preferably 5 - 15 mpa·s. Still further, the dissolved oxygen amount in the ink of the present invention is preferably at most 2 ppm at 25 °C. By realizing the condition of the above dissolved oxygen amount, it is possible to retard formation of air bubbles, whereby it enables an ink-jet recording method which exhibits excellent ejection stability even at high speed printing. It is further possible to determine the amount of oxygen dissolved in the ink, employing an instrument such as a dissolved oxygen meter, DO-14P (produced by DKK-TOA Corp.).

In an image forming method employing the ink-jet ink of the present invention, ink-jet prints are produced in such a manner that ink is ejected in the form of droplets from a printer loaded with ink-jet ink, based on digital signals and deposited on plain paper.

When images are formed via ejecting the ink of the present invention, employed ink jet heads may be either of an on-demand system or a continuous system. Further, employed ejection systems include an electric-mechanical conversion system (for example, a single cavity type, a double cavity type, a vendor type, a piston type, a shared mode type, or a shared wall type), an electric-thermal conversion system (for example, a thermal ink jet type, or a BUBBLE INK (registered trade name) type.

Of these, in the ink-jet recording method using the ink of the present invention, it is preferable that recording is conducted onto plain paper by ejecting the ink of the present invention from a piezo type ink-jet recording head at a nozzle diameter of at most 30 $\mu$m, and further by ejecting from the line head system piezo type ink-jet recording head at a nozzle diameter of at most 30 $\mu$m.

By conducting printing employing, as a printing system of ink-jet printers, the recording heads of the line head system instead of those of the shuttle head system, it is possible to sufficiently realize the desired printing characteristics of the present invention, whereby it is possible to achieve an excellent dot shape (circular) during deposition of ink droplets onto plain paper, as well as desired printing accuracy.

Specifically, in view of fully realizing the targeted effects of the present invention, it is preferable that the ink of the present invention is applied to an ink-jet recording system which enables image printing onto both sides of plain paper.

During dual-sided printing, it is common that plain paper which has been printed on one side is reversed and then conveyed so that the printed surface faces downward. The ink of the present invention exhibits the above characteristics. Consequently, when printed onto both sides, neither penetration to the rear side nor bleeding of characters occurs, whereby on each side, high quality text at a high density can be printed on both sides, no conveying problems occur, and the conveying belt is not stained with the ink.

Plain paper employed in the ink-jet recording method employing the ink of the present invention is not particularly limited. However, preferred are non-coated paper, special printing paper, and non-coated paper belonging to a part of information paper at a thickness of 80 - 200 $\mu$m. The plain paper according to the present invention is constituted employing chemical pulp represented by LBKP and NBKP, sizing agents, and fillers as major components, if desired, employing paper making aids, and is produced employing a conventional method. The pulp employed in the plain paper may be employed together with mechanical pulp and recycled paper pulp, which may be employed as main materials without any problems.

Examples of sizing agents incorporated into the plain paper include rosin sizing agents, AKD, alkenyl succinate anhydride, petroleum resin based sizing agents, epichlorohydrin, cationic starch, and acrylamide.

Further, examples of fillers incorporated into the plain paper include finely powdered silicic acid, aluminum silicate, diatomaceous earth, kaolin, kaolinite, halloysite, nacrite, dickite, pyrophillite, sericite, titanium dioxide, and bentonite.

Further, in view of minimizing ink penetration to the rear side and enhancing fixability of pigments, incorporated may be water-soluble polyvalent metal salts. Water-soluble polyvalent metal salts are not particularly limited, and salts of aluminum, calcium, magnesium, zinc, iron, strontium, barium, nickel, copper, scandium, gallium, indium, titanium, zirconium, tin, and lead may be incorporated in the form of sulfates, nitrates, formates, succinates, malonates, chloroacetates, or p-toluene sulfonates. Further, employed as water-soluble polyvalent metal ion salts may be water-soluble inorganic polymers such as polychlorinated aluminum. The water solubility is preferably at least 0.1% by weight, but is more preferably at least 1% by weight. Of these, water-soluble salts of aluminum, calcium, magnesium, or zinc are preferred since metal ions are colorless. Particularly preferred are aluminum chloride, aluminum sulfate, aluminum nitrate, aluminum acetate, calcium chloride, calcium sulfate, calcium nitrate, calcium acetate, magnesium chloride, magnesium sulfate, magnesium nitrate, magnesium acetate, zinc chloride, zinc sulfate, zinc nitrate, and zinc acetate.

## EXAMPLES

The present invention will now be described with reference to examples, however the present invention is not limited thereto. In the examples, "parts" or "%" is employed, each of which represents "parts by weight" or "% by weight", unless otherwise specified.

<<Preparation of Inks>>

(Preparation of Pigment Dispersion)

After blending 15 parts of MA100 (MITSUBISHI CARBON BLACK MA100, produced by Mitsubishi Chemical Corp.) as a pigment, 15 parts of JOHNCRYL 501 (produced by Johnson Polymer Co.) as a dispersing resin, 5 parts of tripropylene glycol monomethyl ether (TPGME), and 65 parts of water, the resulting mixture was sealed in a polypropylene bottle together with 200 g of 0.5 mm diameter zirconia beads. Subsequently, dispersion was conducted via a paint shaker over 5 hours, whereby a black pigment dispersion was prepared.

(Preparation of Inks 1 - 38)

The pigment dispersion, prepared as above, was blended with a combination of an anti-curling agent, the above solvent, water, and the surface active agent (SURFINOL 104E, produced by Nissin Chemical Industry Co., Ltd.) the type and amount of which are described in Table 1, and the resulting mixture was vigorously stirred, filtered via a #3500 mesh metal filter, and degassed via a hollow fiber membrane, whereby Inks 1 - 38 were produced.

Table 2 shows physical property values (SP values and surface tension) of each solvent in production of above Inks 1 - 38.

The solvents in Table 1, represented by abbreviations are detailed below.

PG: polypropylene glycol
TPGME: tripropylene glycol monomethyl ether
DEG: diethylene glycol
1,3BD: 1,3-butnaediol
TEGBE: triethylene glycol monobutyl ether
EG: ethylene glycol
EtOH: ethanol

Table 1

| Sample | Solvent | *1 | Anti-Curling Agent | *2 | *3 | *4 | Water | |
|--------|---------|----|--------------------|----|----|----|-------|------|
| 1 | water based | | acetanilide | 3 | 13 | 0.05 | 84 | Comp. |
| 2 | water based | | nicotinamide | 5 | 13 | 0.05 | 82 | Comp. |

(continued)

| Sample | Solvent | *1 | Anti-Curling Agent | *2 | *3 | *4 | Water | |
|---|---|---|---|---|---|---|---|---|
| 3 | PG | 60 | N-methylbenzamide | 5 | 13 | 0.05 | 22 | Comp. |
| 4 | PG | 60 | acetanilide | 5 | 13 | 0.05 | 22 | Comp. |
| 5 | PG | 60 | octylurea | 5 | 13 | 0.05 | 22 | Inv. |
| 6 | PG | 60 | nicotinamide | 5 | 13 | 0.05 | 22 | Inv. |
| 7 | PG | 60 | benzylurea | 5 | 13 | 0.05 | 22 | Inv. |
| 8 | PG | 60 | benzamide | 5 | 13 | 0.05 | 22 | Inv. |
| 9 | PG | 60 | 1,3-dibutylurea | 5 | 13 | 0.05 | 22 | Comp. |
| 10 | PG | 60 | formanilide | 5 | 13 | 0.05 | 22 | Comp. |
| 11 | TEGBE | 60 | benzamide | 5 | 13 | 0.05 | 22 | Inv. |
| 12 | 13BuDO | 60 | benzamide | 5 | 13 | 0.05 | 22 | Inv. |
| 13 | DEG | 60 | benzamide | 5 | 13 | 0.05 | 22 | Inv. |
| 14 | EG | 60 | benzamide | 5 | 13 | 0.05 | 22 | Comp. |
| 15 | EtOH | 60 | benzamide | 5 | 13 | 0.05 | 22 | Inv. |
| 16 | PG | 60 | nicotinamide | 15 | 13 | 0.05 | 12 | Inv. |
| 17 | TPGME | 60 | nicotinamide | 15 | 13 | 0.05 | 12 | Inv. |
| 18 | PG | 60 | acetanilide | 5 | 13 | 0.05 | 22 | Comp. |
| 19 | TPGME | 60 | acetanilide | 5 | 13 | 0.05 | 22 | Comp. |
| 20 | PG | 10 | nicotinamide | 5 | 13 | 0.05 | 72 | Inv. |
| 21 | PG | 30 | nicotinamide | 5 | 13 | 0.05 | 52 | Inv. |
| 22 | PG | 75 | nicotinamide | 5 | 13 | 0.05 | 7 | Inv. |
| 23 | PG | 85 | nicotinamide | 5 | 10 | 0.05 | 0 | Inv. |
| 24 | PG | 10 | acetanilide | 5 | 13 | 0.05 | 72 | Comp. |
| 25 | PG | 30 | acetanilide | 5 | 13 | 0.05 | 52 | Comp. |
| 26 | PG | 75 | acetanilide | 5 | 13 | 0.05 | 7 | Comp. |
| 27 | PG | 85 | acetanilide | 5 | 10 | 0.05 | 0 | Comp. |
| 28 | water based | | 2-methyl-2-hydroxymethyl-1,3-propane | 5 | 13 | 0.05 | 82 | Comp. |
| 29 | water based | | N,N-dimethylurea | 5 | 13 | 0.05 | 82 | Comp. |
| 30 | water based | | | | 13 | 0.05 | 87 | Comp. |
| 31 | PG | 60 | 2-methyl-2-hydroxymethyl-1,3-propane | 5 | 13 | 0.05 | 22 | Comp. |
| 32 | PG | 60 | N,N-dimethylurea | 5 | 13 | 0.05 | 22 | Comp. |
| 33 | PG | 60 | N-methylacetamide | 5 | 13 | 0.05 | 22 | Comp. |
| 34 | PG | 60 | 1,3-dimethyl-imidazolidinone | 5 | 13 | 0.05 | 22 | Comp. |
| 35 | PG | 60 | N,N-diethylacetamide | 5 | 13 | 0.05 | 22 | Comp. |
| 36 | PG | 60 | 7-hepatanelactam | 5 | 13 | 0.05 | 22 | Comp. |
| 37 | PG | 60 | phenylurea | 5 | 13 | 0.05 | 22 | Comp. |

(continued)

| Sample | Solvent | *1 | Anti-Curling Agent | *2 | *3 | *4 | Water | |
|---|---|---|---|---|---|---|---|---|
| 38 | PG | 60 | | | 13 | 0.05 | 27 | Comp. |

*1: solvent Amount, *2: Added Amount, *3: Added Amount of Dispersion, *4: Added Amount of Surface Active Agent
Inv.: Present Invention, Comp.: Comparative Example

Table 2

| Solvent Name | Surface Tension (mN/m) | SP Value |
|---|---|---|
| ethylene glycol (EG) | 49 | 14.8 |
| propylene glycol (PG) | 72 | 13.5 |
| diethylene glycol (DEG) | 42 | 12.9 |
| 1,3-butanediol (1,3BD) | 38 | 12.8 |
| tripropylene glycol monomethyl ether (TPGME) | 30 | 9.4 |
| triethylene glycol monobutyl ether (TEGBE) | 32 | 9.8 |
| ethanol(EtOH) | 22 | 11.0 |

<<Ink Evaluation>>

(Evaluation of Curling Resistance)

By employing, at 25 °C and relative humidity of 50%, a line head printer loaded with a line head system piezo type recording head having 512 nozzles at a nozzle aperture diameter of 25 $\mu$m, arranged in an array to realize a nozzle resolution of 600 dpi, a solid color image was printed, employing each of Inks 1 - 25, onto one side of J PAPER (64 g/m$^2$, A4 size), produced by Konica Minolta Business Technologies, Inc. under conditions of a recording resolution of 600 x 600 dpi, at a printed ink amount of 10 ml/m$^2$, in such a manner that 5 mm from each of the edges was not printed.
Each of the samples, printed as above, was allowed to stand at 25 °C and relative humidity 50% for 10 days. Thereafter, radius of curvature, R (in mm) of each sample was determined. Employed as a curl index was 1,000/R and curling resistance was determined based on the following criteria.

A: 1,000/R was less than 2.0
B: 1,000/R was 2.0 - 4.0
C: 1,000/R was 4.0 - 5.0
D: 1,000/R was 5.0 - 6.0
E: 1,000/R was equal to or more than 6.

Table 3 shows the results.

(Evaluation of Ejection Stability)

Each of Inks 1 - 38, prepared as above, was continuously ejected for one minute from a share mode piezo type ink-jet head having 256 nozzles at a nozzle aperture of 20 $\mu$m under ejection conditions of a droplet volume of 7 pl and a driving frequency of 15kHz. After one hour, the ejection state was visually observed and ejection properties were evaluated based on the following criteria.

A: At all 256 nozzles, ejection was good
B: At 1 - 10 nozzles, ejection direction was shifted
C: At more than or equal to 11 nozzles, ejection direction was shifted or at one or more nozzles, no ejection was noted

The evaluation results of Curling Resistance and Ejection Stability are listed in Table 3.
Further, the following evaluations were done.

(Evaluation of Intermittent Ejection Stability)

Each of Inks 1 - 27, prepared as above, was loaded in the ink-jet head of a share mode piezo type having 256 nozzles at a nozzle aperture diameter of 20 mμ, and was allowed to stand for one hour without being capped. After one hour, ejection was conducted under conditions of an ink droplet volume of 7 p1 and a driving frequency of 15 kHz, and ejection state was evaluated as follows.

A: Within 1,000-droplet ejection, ejection became acceptable at all 256 nozzles
B: After 1,000-droplet or more ejection, or nozzle cleaning via ink suction, ejection became acceptable at all 256 nozzles
C: Even after nozzle cleaning via ink suction, ejection direction was shifted
D: Even after nozzle cleaning via ink suction, no ejection from nozzles was not recovered

(Evaluation of Rear Side Penetration Resistance)

By employing a line head printer loaded with a line head system piezo type recording head having 512 nozzles at a nozzle aperture diameter of 35 μm, arranged in an array to realize a nozzle resolution of 600 dpi (dpi as described in the present invention represents the number of dots per 2.54 cm), a solid color image was printed, employing each of Inks 20 - 25, onto one side of J PAPER (64 g/m$^2$, A4 size), produced by Konica Minolta Business Technologies, Inc. under conditions of a recording resolution of 600 x 600 dpi, at a printed ink amount of 10 ml/m$^2$ and an image size of 200 x 280 mm. The resulting printed sheet was dried in a room maintained at 23 °C and relative humidity 50% for one day while the printed side faced upward, whereby Images 1B - 21B were prepared.

Thereafter, the amber density of each of the images on the printed side and the rear side was determined employing a reflection densitometer (STATUS A), and a rear side penetration ratio was calculated based on the following formula, whereby rear side penetration resistance was evaluated based on the following criteria.

$$\text{Rear side penetration ratio (\%) = (reflection density of the rear side)/(reflection density of the printed side) x 100}$$

A: Rear side penetration ratio was less than 15%
B: Rear side penetration ratio was 15% - 20%
C: Rear side penetration ratio was equal to or more than 20%

Table 3

| sample | Solvent | Anti-Curling Agent | Anti-Curling Agent wt% | Solvent Amount wt% | Water wt% | Curling | *3 | |
|---|---|---|---|---|---|---|---|---|
| 1 | *2 | acetanilide | 3% | 1% | 93% | A | B | Comp. |
| 2 | *2 | nicotinamide | 5% | 1% | 91%, | A | B | Comp. |
| 28 | *2 | *1 | 5% | 1% | 91% | C | A | Comp. |
| 29 | *2 | N,N-dimethylurea | 5% | 1% | 91% | CC | A | Comp. |
| 30 | *2 | | 0% | 1% | 96% | CC | A | Comp. |
| 3 | PG | N-methylbenzamide | 5% | 61% | 31% | B | A | Comp. |
| 4 | PG | acetanilide | 5% | 61% | 31% | A | A | Comp. |
| 5 | PG | octylurea | 5% | 61% | 31% | A | B | Inv. |
| 6 | PG | nicotinamide | 5% | 61% | 31% | A | A | Inv. |

(continued)

| sample | Solvent | Anti-Curling Agent | Anti-Curling Agent wt% | Solvent Amount wt% | Water wt% | Curling | *3 | |
|--------|---------|---------------------|------------------------|--------------------|-----------|---------|-----|------|
| 7 | PG | benzylurea | 5% | 61% | 31% | A | A | Inv. |
| 8 | PG | benzamide | 5% | 61% | 31% | A | A | Inv. |
| 9 | PG | 1,3-butylurea | 5% | 61% | 31% | B | B | Comp. |
| 10 | PG | formanilide | 5% | 61% | 31% | B | A | Comp. |
| 16 | PG | nicotinamide | 15% | 61% | 21% | A | A | Inv. |
| 18 | PG | acetanilide | 5% | 61% | 31% | A | A | Comp. |
| 31 | PG | *1 | 5% | 61% | 31% | C | A | Comp. |
| 32 | PG | N,N-dimethylurea | 5% | 61% | 31% | CC | A | Comp. |
| 33 | PG | N-methylacetamide | 5% | 61% | 31% | CC | A | Comp. |
| 34 | PG | 1,3-dimethylimidazolidinone | 5% | 61% | 31% | CC | A | Comp. |
| 35 | PG | N,N-diethylacetamide | 5% | 61% | 31% | CC | A | Comp. |
| 36 | PG | 7-hepatanelactam | 5% | 61% | 31% | C | A | Comp. |
| 37 | PG | phenylurea | 5% | 61% | 31% | CC | A | Comp. |
| 38 | PG | | 0% | 61% | 36% | CC | A | Comp. |

*1: 2-methyl-2-hydroxymethyl-1,3-propane, *2: water based, *3: Ejection Property
Inv.: Present Invention, Comp.: Comparative Example

It was found that anti-curling agents of the present invention exhibited high anti-curling capability.
Table 4 shows the results with regard to the solvent types.

Table 4

| sample | Solvent | Anti-Curling Agent | Anti-Curling Agent wt% | Solvent Amount wt% | Water wt% | Curling | Ejection Property | Intermittent Ejection Property |
|--------|---------|---------------------|------------------------|--------------------|-----------|---------|-------------------|--------------------------------|
| 8 | PG | benzamide | 5% | 61% | 31% | B | B | A |
| 11 | TEGBE | benzamide | 5% | 61% | 31% | A | B | A |
| 12 | 13BuDO | benzamide | 5% | 61% | 31% | A | B | A |
| 13 | DEG | benzamide | 5% | 61% | 31% | B | B | A |
| 14 | EG | benzamide | 5% | 61% | 31% | B | C | D |
| 15 | EtOH | benzamide | 5% | 61% | 31% | A | B | D |
| 1 | water based | acetanilide | 3% | 1% | 93% | B | C | D |
| 16 | PG | nicotinamide | 15% | 61% | 21% | B | B | B |
| 17 | TPGME | nicotinamide | 15% | 61% | 21% | A | B | B |
| 2 | water based | nicotinamide | 5% | 1% | 91% | B | C | D |
| 18 | PG | acetanilide | 5% | 61% | 31% | B | B | A |

(continued)

| sample | Solvent | Anti-Curling Agent | Anti-Curling Agent wt% | Solvent Amount wt% | Water wt% | Curling | Ejection Property | Intermittent Ejection Property |
|---|---|---|---|---|---|---|---|---|
| 19 | TPGME | acetanilide | 5% | 61% | 31% | A | B | A |

With regard to solvents, compared to 1, 2, and 14 which were not included in claims 2, 8, 11, 12, 13, 15, 16, 17, 18, and 19, which were included in the above claim, exhibited excellent ejection property. Further, 11, 12, 13, 15, 17, and 19, which were included in claim 4, exhibited more enhanced anti-curling capability. Compared to 15 which was included in claim 2 but not in claim 7, those which were included in claim 7 (at a level excluding 1, 2, and 14) exhibited excellent intermittent ejection property, whereby even after allowing to stand without being capped, it was possible to conduct immediate and stable ejection.

Table 5 shows the capability of each anti-curling agent of the present invention.

Table 5

| sample | Solvent | Anti-Curling Agent | Anti-Curling Agent | Solvent Amount wt% | Water wt% | Curling | Ejection Property | Intermittent Ejection Property |
|---|---|---|---|---|---|---|---|---|
| 3 | PG | N-methylbenzamide | 5% | 61% | 31% | C | B | A |
| 4 | PG | acetanilide | 5% | 61% | 31% | B | B | A |
| 5 | PG | octylurea | 5% | 61% | 31% | B | C | C |
| 6 | PG | nicotinamide | 5% | 61% | 31% | B | B | B |
| 7 | PG | benzylurea | 5% | 61% | 31% | B | B | A |
| 8 | PG | benzamide | 5% | 61% | 31% | B | B | A |
| 9 | PG | 1,3-dibutylurea | 5% | 61% | 31% | C | C | C |
| 10 | PG | formanilide | 5% | 61% | 31% | C | B | A |

Of anti-curling agents of the present invention, it was found that 5, 6, 7, and 8 having an amido group in the structure, and acetanilide exhibited marked anti-curling effect. Samples (3, 4, 6, 7, 8, and 10) prepared employing the ink included in claim 5 exhibited excellent ejection property. It was noted that samples (3, 4, 7, 8, and 10) incorporating the compound, having a benzene ring in their structural formula, specifically exhibited excellent intermittent ejection property.

Table 6

| sample | Solvent | Anti-Curling Agent | Anti-Curling Agent wt% | Solvent Amount wt% | Water wt% | Curling | Rear Side Penetration | Ejection Property | *1 |
|---|---|---|---|---|---|---|---|---|---|
| 20 | PG | nicotinamide | 5% | 11% | 81% | B | B | C | C |
| 21 | PG | nicotinamide | 5% | 31% | 61% | B | B | B | B |
| 22 | PG | nicotinamide | 5% | 76% | 16% | B | B | B | B |
| 23 | PG | nicotinamide | 5% | 86% | 7% | B | D | B | B |
| 24 | PG | acetanilide | 5% | 11% | 81% | B | B | C | C |
| 25 | PG | acetanilide | 5% | 31% | 61% | B | B | B | A |
| 26 | PG | acetanilide | 5% | 76% | 16% | B | B | B | A |

(continued)

| sample | Solvent | Anti-Curling Agent | Anti-Curling Agent wt% | Solvent Amount wt% | Water wt% | Curling | Rear Side Penetration | Ejection Property | *1 |
|---|---|---|---|---|---|---|---|---|---|
| 27 | PG | acetanilide | 5% | 86% | 7% | B | D | B | A |
| *1: Inter-mittent Ejection Property | | | | | | | | | |

As can be seen from Table 6, with regard to solvent amount, in view of ejection property, it is preferable that solvent amount was at least 20%, and in the range in which water was incorporated in an amount of at least 10% by weight, the rear side penetration was desirably minimized.

As can clearly be seen from the results described above, compared to the comparative examples, the inks of the present invention, which incorporated the anti-curling agent of the present invention, Solvent A, and water in an amount specified in the present invention formed no insoluble matter from the anti-curling agent in the ink, and realized excellent ejection stability, as well as excellent rear side penetration resistance and curling resistance when printing on plain paper.

**Claims**

1. An ink-jet ink comprising water and a compound represented by Formula (1) or Formula (2), provided that the compound is dissolved in the ink:

$$\text{Formula (1)} \qquad R_1R_2N\text{-}CXNR_3R_4$$

wherein $R_1$ and $R_2$ are each a hydrogen atom; $R_3$ and $R_4$ each independently represents a hydrogen atom, an alkyl group, or a group having a benzene ring or a heterocyclic ring; provided that a total number of carbon atoms and nitrogen atoms contained in $R_3$ and $R_4$ is 7 to 10; and X represents an oxygen atom or a sulphur atom,

$$\text{Formula (2)} \qquad R_5\text{-}CX\text{-}NR_6R_7$$

wherein $R_5$ represents an alkyl group, or a group having a benzene ring or a heterocyclic ring; provided that a total number of carbon atoms and nitrogen atoms in $R_5$ is 6 to 10; $R_6$ and $R_7$ are each a hydrogen atom; and X represents an oxygen atom or a sulphur atom, the ink-jet ink further comprising Solvent A compatible with water and having an SP value of 9 to 13.5, a content of Solvent A being from 50 to 80 weight% based on a total weight of the ink-jet ink.

2. An ink-jet ink according to claim 1,
wherein a content of water is from 10 to 80 weight % based on a total weight of the ink-jet ink.

3. An ink-jet ink according to claim 1,
wherein Solvent A has a surface tension of not more than 40 mN/m at 25 °C.

4. An ink-jet ink according to claim 1,
wherein the compound represented by Formula (1) or Formula (2) comprises a benzene ring or a heterocyclic ring in the molecule.

5. An ink-jet ink according to claim 4,
wherein the compound represented by Formula (1) or Formula (2) is acetanilide.

6. An ink-jet ink according to claims 1 to 5,
wherein Solvent A has a smaller vapour pressure than water.

7. An ink-jet ink according to claim 6,
wherein the compound represented by Formula (1) or Formula (2) comprises a benzene ring in the molecule.

**Patentansprüche**

1. Tintenstrahltinte, die Wasser und eine Verbindung der Formel (1) oder Formel (2), vorausgesetzt, die Verbindung wird in der Tinte gelöst, umfasst:

Formel (1)        $R_1R_2N-CXNR_3R_4$

worin $R_1$ und $R_2$ jeweils für ein Wasserstoffatom stehen; $R_3$ und $R_4$ jeweils unabhängig voneinander für ein Wasserstoffatom, eine Alkylgruppe oder eine Gruppe mit einem Benzolring oder einem heterocyclischen Ring stehen; mit der Maßgabe, dass die Gesamtzahl der Kohlenstoffatome und Stickstoffatome, die in $R_3$ und $R_4$ enthalten sind, 7 bis 10 beträgt; und X für ein Sauerstoffatom oder ein Schwefelatom steht,

Formel (2)        $R_5-CX-NR_6R_7$

worin $R_5$ für eine Alkylgruppe oder eine Gruppe mit einem Benzolring oder einem heterocyclischen Ring steht, mit der Maßgabe, dass die Gesamtzahl der Kohlenstoffatome und Stickstoffatome in $R_5$ 6 bis 10 beträgt; $R_6$ und $R_7$ jeweils für ein Wasserstoffatom stehen und X für ein Sauerstoffatom oder ein Schwefelatom steht; wobei die Tintenstrahltinte ferner ein Lösemittel A umfasst, das mit Wasser kompatibel ist und einen SP-Wert von 9 bis 13,5 aufweist, wobei der Gehalt an dem Lösemittel A 50 bis 80 Gew.-%, bezogen auf das Gesamtgewicht der Tintenstrahltinte, beträgt.

2. Tintenstrahltinte nach Anspruch 1, wobei der Gehalt an Wasser 10 bis 80 Gew.-%, bezogen auf das Gesamtgewicht der Tintenstrahltinte, beträgt.

3. Tintenstrahltinte nach Anspruch 1, wobei das Lösemittel A eine Oberflächenspannung von nicht mehr als 40 mN/m bei 25 °C aufweist.

4. Tintenstrahltinte nach Anspruch 1, wobei die Verbindung der Formel (1) oder der Formel (2) einen Benzolring oder einen heterocyclischen Ring in dem Molekül umfasst.

5. Tintenstrahltinte nach Anspruch 4, wobei die Verbindung der Formel (1) oder der Formel (2) ein Acetanilid ist.

6. Tintenstrahltinte nach den Ansprüchen 1 bis 5, wobei das Lösemittel A einen kleineren Dampfdruck als Wasser aufweist.

7. Tintenstrahltinte nach Anspruch 6, wobei die Verbindung der Formel (1) oder der Formel (2) einen Benzolring im Molekül umfasst.

**Revendications**

1. Encre pour impression à jet d'encre comprenant de l'eau et un composé représenté par la formule (1) ou la formule (2), étant entendu que le composé est dissous dans l'encre :

Formule (1)        $R_1R_2N-CXNR_3R_4$

dans laquelle $R_1$ et $R_2$ sont chacun un atome d'hydrogène ; $R_3$ et $R_4$ représentent chacun indépendamment un atome d'hydrogène, un groupe alkyle, ou un groupe ayant un noyau benzénique ou un noyau hétérocyclique ; étant entendu que le nombre total d'atomes de carbone ou d'atomes d'azote contenus dans $R_3$ et $R_4$ est de 7 à 10 ; et X représente un atome d'oxygène ou un atome de soufre,

Formule (2)        $R_5-CX-NR_6R_7$

dans laquelle $R_5$ représente un groupe alkyle, ou un groupe ayant un noyau benzénique ou un noyau hétérocyclique ; étant entendu que le nombre total d'atomes de carbone et d'atomes d'azote dans $R_5$ est de 6 à 10 ; $R_6$ et $R_7$ sont chacun un atome d'hydrogène ; et X représente un atome d'oxygène ou un atome de soufre, l'encre pour jet d'encre comprenant en outre un Solvant A compatible avec l'eau et ayant une valeur de paramètre de solubilité de 9 à 13,5, la teneur en Solvant A étant de 50 à 80% en poids sur la base du poids total de l'encre pour jet d'encre.

2. Encre pour jet d'encre selon la revendication 1, dans laquelle la teneur en eau est de 10 à 80 % en poids sur la base du poids total de l'encre pour jet d'encre.

3. Encre pour jet d'encre selon la revendication 1, dans laquelle le Solvant A a une tension superficielle non supérieure à 40 mN/m à 25°C.

4. Encre pour jet d'encre selon la revendication 1, dans laquelle le composé représenté par la Formule (1) ou la Formule (2) comprend un noyau benzénique ou un noyau hétérocyclique dans la molécule.

5. Encre pour jet d'encre selon la revendication 4, dans laquelle le composé représenté par la Formule (1) ou la Formule (2) est l'acétanilide.

6. Encre pour jet d'encre selon les revendications 1 à 5, dans laquelle le Solvant A a une pression de vapeur plus petite que celle de l'eau.

7. Encre pour jet d'encre selon la revendication 6, dans laquelle le composé représenté par la Formule (1) ou la Formule (2) comprend un noyau benzénique dans la molécule.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9176538 A
- JP 6157955 A
- JP 6240189 A
- JP 2002264490 A
- JP 57074193 A
- JP 57087988 A
- JP 62261476 A
- JP 57074192 A
- JP 57087989 A

- JP 60072785 A
- JP 61146591 A
- JP 1095091 A
- JP 3013376 A
- JP 59042993 A
- JP 59052689 A
- JP 62280069 A
- JP 61242871 A
- JP 4219266 A